# EUROPÄISCHE PATENTSCHRIFT

(11) **EP 2 165 404 B1**
(45) Veröffentlichungstag und Bekanntmachung des Hinweises auf die Patenterteilung: **26.03.2014**
(21) Anmeldenummer: 08774453.8
(22) Anmeldetag: 27.06.2008
(51) Int. Cl.: H02K 1/16, H02K 3/28, H02K 3/12

(54) **STATOR FÜR EINEN ELEKTRISCHEN ANTRIEBSMOTOR**
STATOR FOR AN ELECTRIC DRIVE MOTOR
STATOR DESTINÉ À UN MOTEUR D'ENTRAÎNEMENT ÉLECTRIQUE

(30) Priorität: 04.07.2007 DE 102007030980
(43) Veröffentlichungstag der Anmeldung: 24.03.2010
(73) Patentinhaber: Robert Bosch GmbH, 70442 Stuttgart (DE)
(72) Erfinder: KRAUTH, Wolfgang, 77855 Achern-Sasbachried (DE); DECKER, Gerhard, 77855 Achern (DE)
(86) Internationale Anmeldenummer: PCT/EP2008/058291
(87) Internationale Veröffentlichungsnummer: WO 2009/003949

(56) Entgegenhaltungen:
- FR-A- 1 496 845
- JP-A- 6 070 519
- JP-A- 57 186 936
- JP-A- 62 203 527
- JP-A- 2001 128 437
- JP-A- 2005 304 166

## Beschreibung

### Technisches Gebiet

Die Erfindung betrifft einen Stator für einen elektrischen Antriebsmotor mit einer Anzahl durch Nuten getrennter Statorzähne und mit einer mehrsträngigen Wicklung, die insbesondere als Drehstromwicklung ausgelegt sein kann, wobei zumindest einige der durch die Wicklung gebildeten Spulen mehrere Statorzähne umfassen.

### Stand der Technik

Statoren dienen der Aufnahme von Spulen, die durch entsprechende Schaltvorgänge derart bestromt werden können, dass sich ein magnetisches Drehfeld ausbildet. Die Wechselwirkung dieses magnetischen Drehfeldes mit einem magnetbestückten Rotor führt zum Auftreten von Drehmomenten, die eine Rotation des Rotors und eine entsprechende Leistungsabgabe des Elektromotors ermöglichen. Die Aufgabe des Stators besteht dabei neben der mechanischen Aufnahme der Spulen in der Gewährleistung einer für den Motorbetrieb erforderlichen Feldgeometrie, was durch den Einsatz geeigneter Materialien für den Aufbau des Stators sowie dafür geeignete Geometrien der Statorzähne bewirkt wird. Es ist bekannt, dass der Wirkungsgrad eines Stators wesentlich von seiner Nutfüllung, d.h. dem gesamten Leiterquerschnitt in Bezug auf die Gesamtfläche des Statorquerschnitts, bestimmt wird. Es wird daher angestrebt, möglichst hohe Nutfüllungen zu realisieren.

Neben dem Grad der Nutfüllung sind jedoch weitere geometrische Parameter eines Stators für mechanische Eigenschaften eines Elektromotors von Bedeutung. Dazu zählen unter anderem der Grad induktiver Kopplung zu Nachbarsträngen, sowie die Gleichmäßigkeit der während des Motorbetriebes an den Rotor angreifenden Drehmomente. Für eine hohe Laufruhe und einen geräuscharmen Betrieb ist es erforderlich, dass einerseits Kräfte möglichst symmetrisch und zumindest paarweise angreifen und die während des Betriebes des Motors auftretenden Kräfte sich vollständig durch Drehmomente beschreiben lassen, deren Ausrichtung durch die Drehachse des Rotors charakterisiert wird. Kräfte, die zu einer Ausrückung des Rotors führen würden, sollten möglichst vollständig vermieden werden. Des weiteren ist für eine hohe Laufruhe des Elektromotors von Vorteil, wenn die während des Betriebs auftretenden Drehmomente möglichst gleichmäßig wirken, d.h. dass sich das abgreifbare Drehmoment an der Motorwelle durch eine möglichst geringe Welligkeit auszeichnet.

Aus den genannten Gründen sind verschiedene Ansätze bekannt geworden, die Wicklung von Statoren so vorzunehmen, dass sich die Spulen der einzelnen Stränge zumindest teilweise überlappen, wodurch sich ein hoher Nutfüllungsgrad mit einer relativ hohen Feldverstetigung erzielen lässt. Es ist bekannt, drei- oder mehrsträngige Drehstromwicklungen so aufzubauen, dass die einzelnen Spulen jeweils mehrere Zähne des Stators umfassen und sich gegenseitig überlappen. Die einzelnen Statorzähne sind in diesem Falle symmetrisch ausgebildet und sternförmig bzw. radialsymmetrisch am Statorumfang angeordnet. Die Wicklung ist dabei so ausgeführt, dass zunächst eine Lage von Spulen unmittelbar auf dem Nutgrund angeordnet ist, was für eine sichere Positionierung der Spulen sorgt. Eine weitere Lage von Spulen wird versetzt gewickelt, wobei wiederum je Spule mehrere Zähne umfasst sind und sich die auf diese Weise gewickelten Spulen in direktem mechanischen Kontakt mit den Spulen am Nutgrund des Stators befinden. Diese Vorgehensweise wird gegebenenfalls mehrfach wiederholt. Es ergeben sich auf diese Weise Stapel übereinanderliegender, jedoch seitlich versetzt ausgebildeter Spulen, deren Lagestabilität mit wachsendem Abstand vom Nutgrund zunehmend von der Gleichmäßigkeit der einzelnen ausgeführten Wicklungen abhängt, was technologisch bedingt zu geometrischen Abweichungen führen kann, die sich in einer gewissen Streuung der Induktivitäten der einzelnen Stränge bzw. Spulen niederschlagen kann. Ein weiterer Nachteil einer derartigen Anordnung besteht darin, dass die geometrischen Abmessungen der einzelnen Spulen ohnehin vom Abstand zum Statormittelpunkt abhängen und sich entsprechend verändern. Ein weiterer Nachteil derartiger Ausgestaltungen besteht darin, dass die Nuten trotz der sich überlappenden Spulen relativ schlecht ausgenutzt werden. Ferner ergibt sich ein hoher Wickelkopf durch die sich überlagernden Spulen.

Es ist bekannt, jeweils mehrere Statorzähne zu einem Zahn zusammenzufassen. Das geschieht vorzugsweise auf etwa halber Höhe des Zahnhalses (DE 198 38 335 A1). Zusammengefasste Statorzähne werden dabei mit einfachen Statorzähnen kombiniert, wobei sowohl die zusammengefassten als auch die einfachen Statorzähne wiederum symmetrisch ausgebildet sind, jedoch in einer Weise, dass sich asymmetrische Nuten für eine Wicklung ergeben. Auf diese Weise werden unterschiedliche Wickelebenen realisiert, ohne dass sich die Spulen der unterschiedlichen Ebenen gegenseitig berühren bzw. abstützen, was für eine höhere geometrische Gleichmäßigkeit der Gesamtwicklung sorgt. Ein Nachteil dieser Ausgestaltung besteht jedoch ebenfalls darin, dass die geometrischen Parameter der Spulen in unterschiedlichen Wickelebenen stark voneinander abweichen, was teilweise durch unterschiedliche Wicklungszahlen bzw. unterschiedliche Bestromungen oder mit relativ großem Aufwand verbundene Schaltungsmaßnahmen kompensiert werden muss. Ein weiterer Nachteil dieser Anordnung besteht ebenfalls in einer noch ungenügenden Ausnutzung des Bauvolumens.

Es wurde des weiteren vorgeschlagen, Statorgeometrien mit zusammengefassten Statorzähnen weiter zu optimieren, um den Bauraum noch besser ausnutzen zu können. Es ist bekannt, Statoren aufzubauen, die ausschließlich zweifach zusammengefasste Statorzähne enthalten. Alle zusammengefassten Statorzähne sind wiederum symmetrisch ausgebildet und sternförmig am Statorumfang angeordnet. Dabei können alle zusammengefassten Statorzähne gleich ausgelegt sein oder aber auch verschiedene Statorzahntypen abwechselnd angeordnet sein. Durch die Beschränkung auf zweifach zusammengefasste Statorzähne entfällt eine mechanische Separation benachbarter Spulen in einer Wickelebene, was zu einer Verbesserung der Ausnutzung des Bauvolumens führt. Ein verbleibender Nachteil derartiger Statoranordnungen ist jedoch die unterschiedliche geometrische Auslegung der einzelnen Spulen in unterschiedlichen Wickelebenen, was zu den bereits angesprochenen Nachteilen führt, die gegebenenfalls durch einen erhöhten Schaltungsaufwand zu kompensieren sind.

Weiter zeigt die JP 2001 128 437 A eine Anordnung von parallelen Statorzähnen ohne zahnköpfe wobei jeweills mehrere Statorzähne umschließende Magnetspulen auf den Statorzähnen angeordnet sind.

### Offenbarung der Erfindung

Die Erfindung besteht in einem Stator für einen elektrischen Antriebsmotor mit einer Anzahl durch Nuten getrennter Statorzähne, wobei Statorzähne von einer vorzugsweise mehrsträngigen Wicklung umwickelt sind, wobei sich benachbarte Spulen zumindest teilweise überlappen, wobei Spulen umfasst sind, die jeweils mindestens zwei Statorzähne umschließen und die jeweils in einer Nut zwischen zwei Statorzähnen durch einen ersten Nutbereich verlaufen und in einer weiteren Nut zwischen zwei Statorzähnen durch einen zweiten Nutbereich verlaufen, wobei die ersten Nutbereiche entlang einer ersten, parallel zu einer Anordnung der Statorzähne verlaufenden Anordnungslinie und die zweiten Nutbereiche entlang einer zweiten, zu der ersten Anordnungslinie radial versetzten weiter vom Statormittelpunkt entfernten Anordnungslinie angeordnet sind, wobei die Statorzähne Zahnköpfe aufweisen welche asymmetrisch angeordnet sind und jeweils vom Zentrum der Spule wegweisen, welche durch den zweiten Nutbereich verläuft.

Um die Nachteile des Standes der Technik zu vermeiden, geht die Erfindung davon aus, überlappende Spulen einer Statorwicklung geometrisch identisch auszuführen. Zu diesem Zwecke wird bei einer erfindungsgemäßen Wicklung eines erfindungsgemäßen Stators von einer tangentialen Ausrichtung der einzelnen Spulen an Umfang des Stators abgewichen. Bei der erfindungsgemäßen Wicklung werden jeweils mindestens zwei Statorzähne von einer Spule umfangen, wobei die Spule so ausgerichtet ist, dass sie sich in einer Nut zwischen zwei Statorzähnen in dem ersten Nutbereich, z.B. direkt auf dem Nutgrund, befindet und in einer weiteren Nut zwischen zwei Statorzähnen durch einen zweiten Nutbereich verläuft, der von dem ersten Nutbereich dieser weiteren Nut radial beabstandet ist. Dadurch wird der erste Nutbereich dieser weiteren Nut freigehalten und kann eine weitere Spule aufnehmen, die sich von dort aus zu einer dritten Nut zwischen zwei Statorzähnen erstrecken kann. Auf diese Weise lassen sich Wicklungen realisieren, die aus Spulen bestehen, die gegenüber einer tangentialen Anordnung schräg versetzt angeordnet sind und sich auf diese Weise teilweise überlappen, wobei sich eine derartige Wicklungsanordnung realisieren lässt, ohne auf geometrisch unterschiedlich ausgestaltete Spulen zurückgreifen zu müssen. In einer einfachen Ausgestaltung der Erfindung genügt es dazu, einen Stator mit sternförmig angeordneten Statorzähnen erfindungsgemäß zu bewickeln, indem jeweils zwei Zähne von einer Spule umfangen werden, wobei ein Teil jeder Spule unmittelbar in dem ersten Nutbereich zwischen zwei Statorzähnen liegt und der andere Teil der Spule beispielsweise durch den zweiten Nutbereich der übernächsten Nut an einem Umfang des Stators verläuft. Die Ausrichtung der Spule ergibt sich beispielsweise durch den Kontakt zu einer weiteren Spule, die am Nutgrund der nächsten bzw. übernächsten oder einer weiteren Nut am Statorumfang beginnt und in gleicher Weise schräg ausgerichtet ist.

Bei einer derartigen Wicklung eines erfindungsgemäßen Stators ist der Stator mit schräg ausgerichteten Statorzähnen ausgestattet und sind die Zahnköpfe auf den Statorzähnen asymmetrisch angeordnet. Auf diese Weise ergibt sich durch asymmetrische Geometrie der Zahnzwischenräume eine bessere Wickelbarkeit. Die asymmetrischen Zahnköpfe bilden gleichzeitig Haken zur Lagefixierung der von dem ersten Nutbereich entfernt liegenden Wicklungsteile, weshalb derart ausgestaltete Statorzähne auch als Hakenzähne bezeichnet werden können. Die Ausrichtung der Statorzähne erfolgt dabei so, dass sie dem Zug der Statorwicklung folgt, also der einzelne Statorzahn jeweils in Richtung des Mittelpunktes derjenigen Spule geneigt ist, die den Statorzahn in seinem kopfnahen Bereich umfängt. Durch den Grad der Schrägstellung der Statorzähne kann gleichzeitig das Maß der Überlappung der einzelnen Spulen festgelegt werden.

Besonders vorteilhaft ist es, nicht nur die Ausrichtung der Zähne zu verändern, sondern die Zähne selbst so zu formen, dass sie im Zusammenspiel mit dem Wicklungszug für eine vollständige Lagefixierung der einzelnen Spulen sorgen. Auf diese Weise kann erreicht werden, dass sich die einzelnen Spulen nicht mehr gegenseitig abstützen, bzw. dass die einzelnen Spulen mechanisch voneinander separiert sind, was für eine besonders hohe Gleichmäßigkeit des Wickelpaketes sorgt. Grundsätzlich lassen sich für eine derartige Ausgestaltung die bereits angesprochenen zusammengefassten Zahnformen nutzen, da diese weitgehend voneinander getrennte Wickelbereiche in dem ersten Nutbereich sowie in einem weiter vom Statormittelpunkt entfernten zweiten Nutbereich aufweisen. Vorteilhafterweise ist es jedoch bei der erfindungsgemäßen Wicklung möglich, den Zahnaufbau gegenüber zusammengefassten Zahngeometrien weiter zu vereinfachen, ohne Abstriche an der Funktionalität des Stators vornehmen zu müssen.

In einer vorteilhaften Ausgestaltung weist jeder Zahn zu diesem Zweck eine S-förmige Form auf, wodurch sich zwei mechanisch voneinander separierte Volumenbereiche auf unterschiedlichen Seiten des jeweiligen Zahnes ergeben, die für die Anlage einer erfindungsgemäßen Wicklung genutzt werden können. Zwischen diesen beiden durch die Wicklung auszufüllenden Volumenbereichen können die S-förmigen Zähne sehr eng benachbart angeordnet sein, wobei der Abstand zwischen den einzelnen Zähnen in diesem Bereich lediglich die Hindurchführung des Wickeldrahtes gewährleisten muss. Bei einer derartigen Ausgestaltung ergibt sich eine fast vollständige Nutfüllung, wenn die beiden durch die Wicklungen auszufüllenden Volumenbereiche vollständig oder fast vollständig von der jeweiligen Wicklung eingenommen werden.

### Kurze Beschreibungen der Zeichnungen

An Ausführungsbeispielen wird die Erfindung im Folgenden näher erläutert. Es zeigen:
Fig. 1 einen Ausschnitt aus einem gewickelten Stator mit konventionell ausgebildeten Statorzähnen;
Fig. 2 einen Ausschnitt aus einem erfindungsgemäß gewickelten Stator mit schräg ausgerichteten Statorzähnen;
Fig. 3 einen Ausschnitt aus einem erfindungsgemäß zu wickelnden Stator mit S-förmigen Statorzähnen;
Fig. 4 einen erfindungsgemäß gewickelten Stator mit S-förmigen Statorzähnen in Draufsicht; und
Fig. 5 einen erfindungsgemäß gewickelten Stator mit S-förmigen Statorzähnen als Schnittdarstellung.

### Ausführungsformen der Erfindung

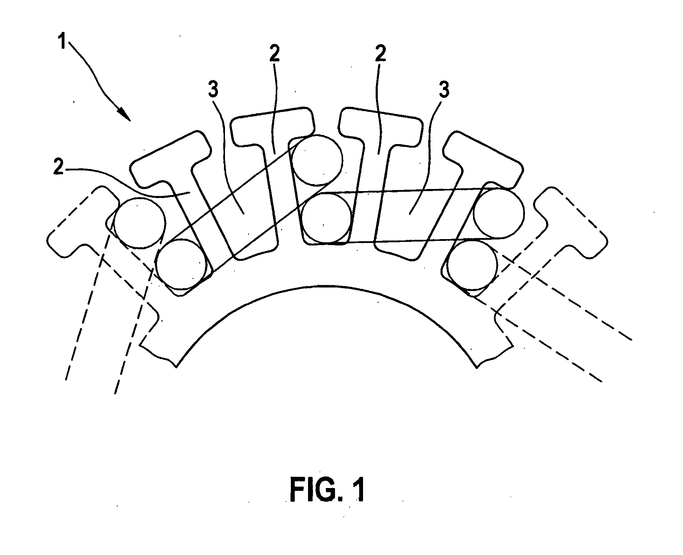

Fig. 1 zeigt einen Ausschnitt aus einem gewickelten Stator 1 mit konventionell ausgebildeten Statorzähnen 2. Die Statorzähne 2 weisen sternförmig von der Symmetrieachse des Stators 1 nach außen. Eine erste Spule 3 umschließt zwei Statorzähne 2 derart, dass sie sich in einer Nut zwischen zwei Statorzähnen 2 direkt auf dem Nutgrund, d.h. in einem ersten Nutbereich, befindet und in der übernächsten Nut zwischen zwei Statorzähnen durch einen zweiten Nutbereich verläuft, der vom Nutgrund dieser übernächsten Nut beabstandet ist, der von einer weiteren identisch gewickelten Spule 3 ausgefüllt wird. Der gesamte Stator 1 kann auf diese Weise durchgewickelt sein.

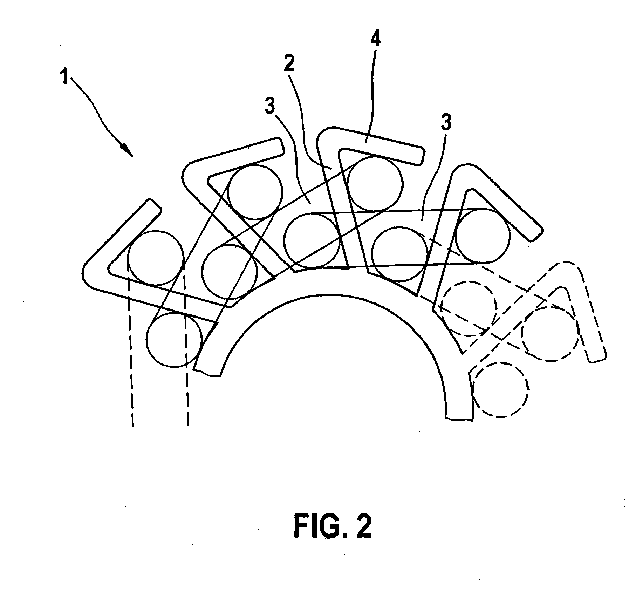

Fig. 2 zeigt einen Ausschnitt aus einem erfindungsgemäß gewickelten Stator 1 mit schräg ausgerichteten Statorzähnen 2. In diesem Ausführungsbeispiel ist jede Nut von mindestens zwei Spulen 3 durchzogen, wobei sich die Wicklungen der Spulen in unterschiedlichen Abständen zur Statormitte befinden. Eine Wicklung durchzieht jeweils den Nutgrund, die andere Wicklung durchzieht jeweils einen Nutbereich, der vom Nutgrund beabstandet ist. Die Statorzähne 2 sind so ausgerichtet, dass sie von einem sternförmigen Verlauf abweichend in Richtung des Spulenmittelpunktes derjenigen jeweils am Statorzahn 2 anliegenden Spule 3, die durch den Nutbereich verläuft, der vom Nutgrund beabstandet ist, geneigt sind. Damit folgt die Ausrichtung der Statorzähne 2 dem Wicklungszug. Die Statorzähne 2 weisen gleichzeitig hakenförmig ausgebildete Zahnköpfe 4 auf, welche asymmetrisch angeordnet sind und jeweils vom Zentrum der Spule 3 wegweisen, welche durch den Nutbereich verläuft, der vom Nutgrund beabstandet ist. Auf diese Weise decken die Zahnköpfe 4 jeweils den oberen Wicklungsteil einer jeden Spule 3 unmittelbar ab und sorgen für eine gute Lagefixierung und gute magnetische Eigenschaften eines derart ausgelegten Stators 1.

Bei den beiden vorangegangenen Ausführungsbeispielen besteht der Vorteil einer geometrisch identischen Ausbildung aller Spulen des Stators, wodurch stich bei entsprechend symmetrischer Ausbildung der einzelnen Stränge identische Wicklungswiderstände und Wicklungsinduktivitäten erzielen lassen. Durch die lediglich zweilagige Ausführung des Wicklungsaufbaus lässt sich auch bei der direkten Abstützung der überlappenden Spulenbereiche aufeinander eine gute Gleichmäßigkeit der elektrischen und geometrischen Wicklungsparameter erreichen.

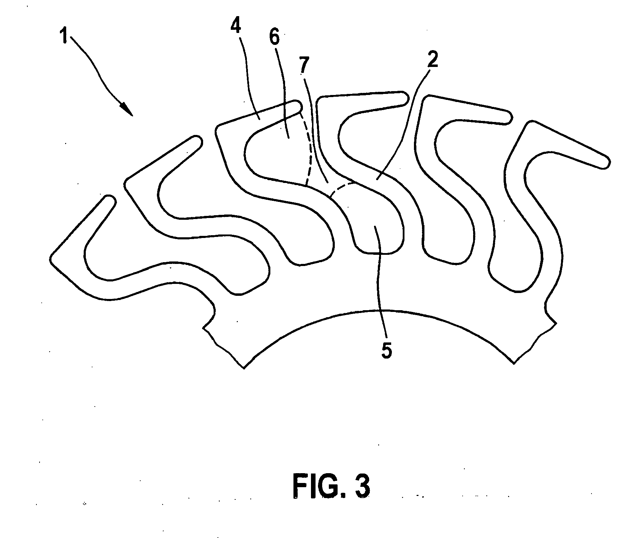

Fig. 3 zeigt einen Ausschnitt aus einem erfindungsgemäß zu wickelnden Stator 1 mit S-förmig gekrümmten Statorzähnen 2, die mit asymmetrischen Zahnköpfen 4 versehen als Hakenzähne ausgebildet sind. Die Statorzähne 2 selbst sind so geformt, dass sie für eine vollständige Lagefixierung der einzelnen Spulen sorgen, indem sie Volumenbereiche 5, 6 in Form Ausbuchtungen zur Aufnahme der Spulen konkav umschließen. Auf diese Weise wird erreicht, dass sich die einzelnen Spulen nicht mehr gegenseitig abstützen, bzw. dass die einzelnen Spulen mechanisch voneinander separiert sind, was für eine besonders hohe Gleichmäßigkeit des Wickelpaketes sorgt.

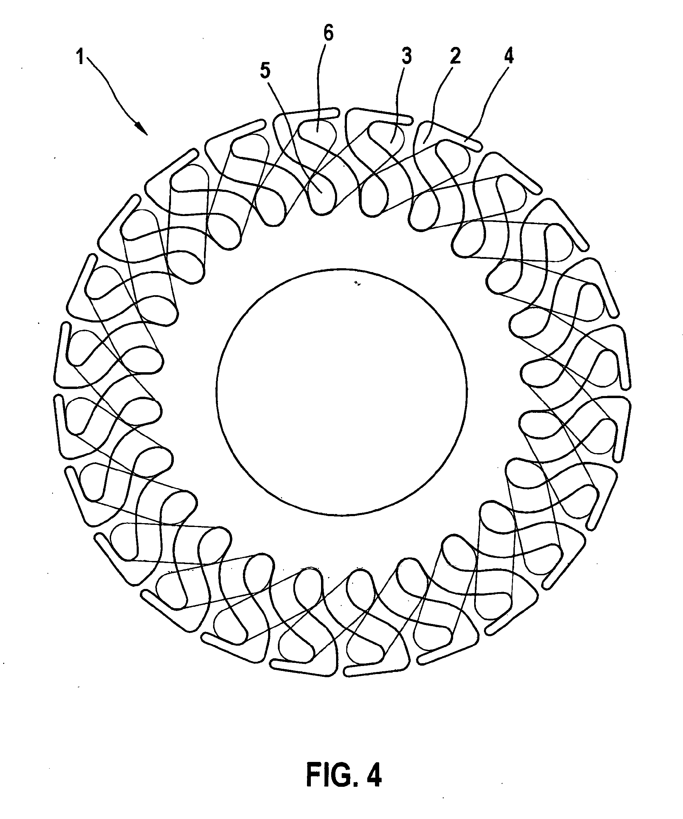

Fig. 4 zeigt einen erfindungsgemäß gewickelten Stator 1 mit S-förmigen Statorzähnen 2 in Draufsicht. Der beispielhafte Stator hat vierundzwanzig S- bzw. hakenförmige Statorzähne 2. Die Wicklung wird vorliegend jeweils über zwei Statorzähne 2 geführt, wobei jede Spule von einem Volumenbereich 5 im Nutgrund einer Nut zwischen zwei Statorzähnen 2 zu einem Volumenbereich 6 unterhalb des Zahnkopfes 4 in der jeweils übernächsten Nut geführt wird. Auf diese Weise erzielt man eine Wicklung, deren einzelne Spulen 3 dicht benachbart angeordnet sind, sich jedoch nicht direkt gegeneinander abstützen, sondern durch die weitgehend vollständige Ausfüllung der einzelnen Volumenbereiche 5, 6, die durch die Statorzähne teilweise umschlossen werden, in ihrer Lage fixiert sind. Die einzelnen Spulen 3 legen sich gewissermaßen diagonal am Umfang des Stators 1 aneinander. Auf diese Weise ergibt sich eine gegenüber dem Stand der Technik nochmals verbesserte Ausnutzung des Bauvolumens und ein sehr hoher Grad der Nutfüllung, auch wenn die jeweiligen Spulen 3 nicht als Einzelzahnspulen ausgeführt sind. Bei voller Ausnutzung des Wickelraumes muss die letzte Nut ausgespart werden, um die letzte Spule durchzufädeln. Bei nicht dargestellten Abwandlungen kann jedoch auf eine vollständige Wicklung aller Nuten verzichtet werden, damit am Ende des Wickelprozesses die letzte Spule nicht durchgefädelt werden muss. Das erfindungsgemäße Wickelprinzip, insbesondere die Ausbildung des Stators als Hakenzahn-Stator, kann auch auf Statorkonstruktionen mit anderer Zahnzahl angewendet werden. Aus der mit dem erfindungsgemäßen Wickelprinzip verbundenen Schräganordnung der einzelnen Spulen 3 folgt des weiteren eine günstige Ausbildung des für den Motorbetrieb erforderlichen Magnetfeldes, was zu einem relativ geringen Rastmoment führt, wodurch Motorkonstruktionen vorteilhafterweise mit erfindungsgemäßen Statoren ausgestattet werden können, die sich durch eine identische Zahl von Statorzähnen und Magnetpolen auf dem Rotor auszeichnen.

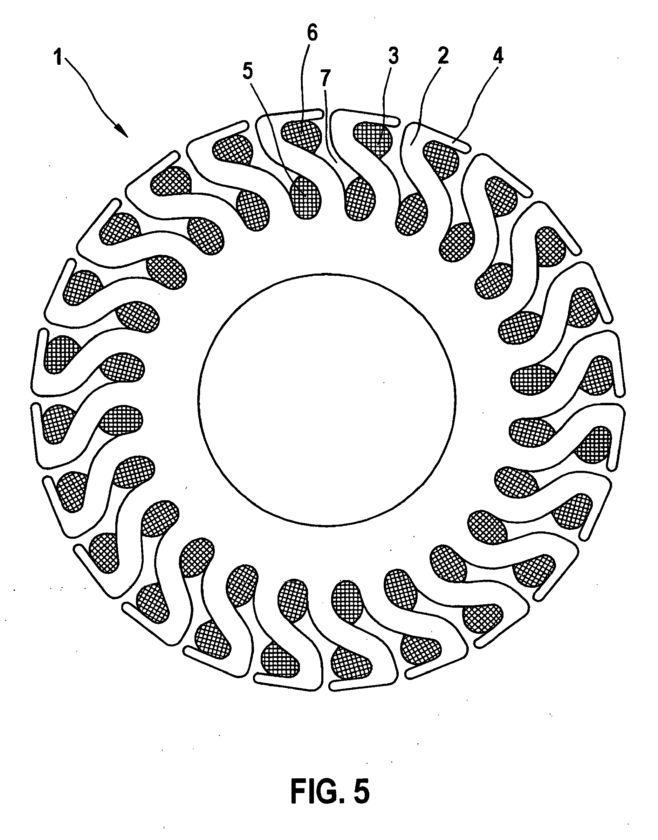

Fig. 5 zeigt einen erfindungsgemäß gewickelten Stator 1 gemäß Fig. 4 als Schnittdarstellung. In dieser Darstellung ist insbesondere der hohe Grad der Nutfüllung erkennbar. Jeweils die konkaven Bereiche der S-förmig gekrümmten Statorzähne 2 sind fast vollständig durch die Wicklungen der Spulen 3 ausgefüllt. Ebenfalls gut sichtbar ist der verringerte Abstand zwischen den Statorzähnen 2 in dem Bereich der Nut, in dem keine Wicklung angeordnet ist. Die Krümmung der Statorzähne 2 ist so ausgelegt, dass sich der von einer Wicklung zu erfüllende Volumenbereich 5 am Nutgrund einer Nut in radialer Richtung jeweils unter dem von einer benachbarten Wicklung zu erfüllenden Volumenbereich 6 einer benachbarten Nut befindet. Auf diese Weise wird erreicht, dass jede Spule 3 jeweils zwei Statorzähne 2 umschließt, jede Nut zwischen zwei Statorzähnen 2 von jeweils zwei Spulen 3 durchzogen wird und die Überlappung zwischen zwei benachbarten Spulen 3 dennoch nur in der Größenordnung des Wicklungsquerschnittes der Spulen 3 liegt. Es hat sich gezeigt, dass eine derartige Überlappung zu einer Schrägung der Spulen 3 führt, die mit besonders guten Gleichlaufeigenschaften eines mit einem derartigen Stator ausgestatteten Elektromotors führt. Ein besonderer Vorteil insbesondere derart ausgebildeter Statoren liegt in der symmetrischen Anordnungsmöglichkeit der einzelnen Stränge, wodurch die einzelnen Wicklungswiderstände und vor allem die ansonsten häufig stark unterschiedlichen Wicklungsinduktivitäten für alle Stränge identisch sind. Dadurch können Bestromungsblöcke für die einzelnen Stränge wesentlich einfacher angesteuert werden. Die S-förmige Ausgestaltung der als Hakenzähne wirkenden Statorzähne 2 ermöglicht daneben eine gute Einstellbarkeit des Verhältnisses zwischen durch Wicklungen auszufüllenden Volumenbereichen 5, 6 und diese Bereiche trennenden Volumenbereichen 7 innerhalb der Nuten des Stators. Dadurch lässt sich mit einer entsprechenden Wickeltechnik ein sehr hoher Kupferfüllfaktor erzielen, was insbesondere für die Realisierung kompakter Bauformen von Elektromotoren unabdingbar ist.

## Patentansprüche

1. Stator (1) für einen elektrischen Antriebsmotor mit einer Anzahl durch Nuten getrennter Statorzähne (2), wobei die Statorzähne (2) von einer Wicklung umwickelt sind, wobei sich benachbarte Spulen (3) zumindest teilweise überlappen, wobei Spulen (3) umfasst sind, die jeweils mindestens zwei Statorzähne (2) umschließen, und die jeweils in einer Nut zwischen zwei Statorzähnen (2) durch einen ersten Nutbereich verlaufen und in einer weiteren Nut zwischen zwei Statorzähnen (2) durch einen zweiten Nutbereich verlaufen, wobei die ersten Nutbereiche entlang einer ersten, parallel zu einer Anordnung der Statorzähne (2) verlaufenden Anordnungslinie und die zweiten Nutbereiche entlang einer zweiten, zu der ersten Anordnungslinie radial versetzten weiter vom Statormittelpunkt entfernten Anordnungslinie angeordnet sind, **dadurch gekennzeichnet, dass** die Statorzähne (2) Zahnköpfe (4) aufweisen, welche asymmetrisch angeordnet sind und jeweils vom Zentrum der Spule (3) wegweisen, welche durch den zweiten Nutbereich verläuft.

2. Stator nach Anspruch 1, **dadurch gekennzeichnet, dass** jede Nut zwischen zwei Statorzähnen (2) in dem ersten Nutbereich von einer Spule (3) durchzogen wird und in dem zweiten Nutbereich von einer anderen Spule (3) durchzogen wird.

3. Stator nach Anspruch 1, **dadurch gekennzeichnet, dass** die Statorzähne (4) von einem sternförmigen Verlauf abweichend in Richtung des Spulenmittelpunktes der Spule (3), die durch den zweiten Nutbereich verläuft geneigt sind.

4. Stator nach einem der Ansprüche 1 bis 3, **dadurch gekennzeichnet, dass** die Statorzähne (2) zwei Bereiche mit unterschiedlichen Krümmungssinn aufweisen, wobei die Krümmungen derart ausgebildet sind, dass sich der obere Bereich des Statorzahnes (2) gegenüber dem Statorfuß in einer versetzten Position befindet und sich die Wicklungen sowohl der durch den ersten Nutbereich verlaufenden Spule (3) als auch der durch den zweiten Nutbereich verlaufenden Spule jeweils an einem konkaven Flächenbereich der Zahnflanken befinden.

5. Stator nach Anspruch 4, **dadurch gekennzeichnet, dass** jeder Statorzahn (2) S-förmig gekrümmt ist und an seinem äußeren Ende einen hakenförmig angesetzten Zahnkopf (4) aufweist, der den durch den zweiten Nutbereich verlaufenden Teil der Wicklungen einer Spule (3) abdeckt.

6. Stator nach einem der Ansprüche 1 bis 5, **dadurch gekennzeichnet, dass** jede Spule (3) zwei Statorzähne (2) umfängt.

7. Stator nach einem der Ansprüche 1 bis 6, **dadurch gekennzeichnet, dass** der Stator (1) vierundzwanzig Statorzähne (2) aufweist.

8. Stator nach einem der Ansprüche 1 bis 7, **dadurch gekennzeichnet, dass** alle Statorzähne (2) identisch ausgebildet sind.

9. Stator nach einem der Ansprüche 1 bis 8, **dadurch gekennzeichnet, dass** die Statorzähne (2) derart geneigt und/oder gekrümmt sind, dass sich der von einer Wicklung einer Spule (3) zu erfüllende Volumenbereich (5) im ersten Nutbereich einer Nut in radialer Richtung jeweils unter dem von der Wicklung einer benachbarten Spule (3) zu erfüllenden Volumenbereich (6) einer benachbarten Nut befindet.

## Claims

1. Stator (1) for an electric drive motor comprising a number of stator teeth (2) separated by slots, wherein a winding is wound around the stator teeth (2), wherein adjacent coils (3) at least partially overlap one another, wherein coils (3) are included which each surround at least two stator teeth (2) and which each run in a slot between two stator teeth (2) through a first slot region and in a further slot between two stator teeth (2) through a second slot region, wherein the first slot regions are arranged along a first arrangement line running parallel to an arrangement of the stator teeth (2), and the second slot regions are arranged along a second arrangement line which is radially offset with respect to the first arrangement line and is further removed from the stator centre point, **characterized in that** the stator teeth (2) have tooth tips (4), which are arranged asymmetrically and which each point away from the centre of the coil (3) which runs through the second slot region.

2. Stator according to Claim 1, **characterized in that** a coil (3) passes through each slot between two stator teeth (2) in the first slot region and another coil (3) passes through each slot between two stator teeth (2) in the second slot region.

3. Stator according to Claim 1, **characterized in that** the stator teeth (4), deviating from a star-shaped profile, are inclined in the direction of the coil centre point of the coil (3), which runs through the second slot region.

4. Stator according to one of Claims 1 to 3, **characterized in that** the stator teeth (2) have two regions with different sense of curvature, wherein the curvatures are formed in such a way that the upper region of the stator tooth (2) is in an offset position in relation to the stator stand and the windings of both the coil (3) running through the first slot region and the coil running through the second slot region are each located on a concave surface region of the tooth flanks.

5. Stator according to Claim 4, **characterized in that** each stator tooth (2) has an S-shaped curvature and has a tooth tip (4) positioned in the form of a hook at its outer end, which tooth tip covers that part of the windings of a coil (3) which runs through the second slot region.

6. Stator according to one of Claims 1 to 5, **characterized in that** each coil (3) embraces two stator teeth (2).

7. Stator according to one of Claims 1 to 6, **characterized in that** the stator (1) has twenty four stator teeth (2).

8. Stator according to one of Claims 1 to 7, **characterized in that** all of the stator teeth (2) are identical.

9. Stator according to one of Claims 1 to 8, **characterized in that** the stator teeth (2) are inclined and/or curved in such a way that the volume region (5) to be filled by a winding of a coil (3) is located in the first slot region of a slot in the radial direction in each case beneath the volume region (6) of an adjacent slot to be filled by the winding of an adjacent coil (3).

## Revendications

1. Stator (1) pour un moteur d'entraînement électrique comprenant une pluralité de dents de stator (2) séparées par des rainures, les dents de stator (2) étant entourées par un enroulement, des bobines adjacentes (3) se chevauchant au moins en partie, des bobines (3) étant comprises, lesquelles entourent à chaque fois au moins deux dents de stator (2) et s'étendent à chaque fois dans une rainure entre deux dents de stator (2) à travers une première région de rainure et s'étendent dans une rainure supplémentaire entre deux dents de stator (2) à travers une deuxième région de rainure, les premières régions de rainure étant disposées le long d'une première ligne d'agencement s'étendant parallèlement à un agencement des dents de stator (2) et les deuxièmes régions de rainure étant disposées le long d'une deuxième ligne d'agencement décalée radialement par rapport à la première ligne d'agencement et plus éloignée du centre du stator, **caractérisé en ce que** les dents de stator (2) présentent des têtes de dent (4) qui sont disposées de manière asymétrique et qui sont à chaque fois tournées à l'écart du centre de la bobine (3) qui s'étend à travers la deuxième région de rainure.

2. Stator selon la revendication 1, **caractérisé en ce que** chaque rainure entre deux dents de stator (2) est traversée dans la première région de rainure par une bobine (3) et dans la deuxième région de rainure par une autre bobine (3).

3. Stator selon la revendication 1, **caractérisé en ce que** les dents de stator (4) sont inclinées en s'écartant d'une allure stellaire dans la direction du centre de la bobine (3) qui s'étend à travers la deuxième région de rainure.

4. Stator selon l'une quelconque des revendications 1 à 3, **caractérisé en ce que** les dents de stator (2) présentent deux régions ayant des sens de courbure différents, les courbures étant réalisées de telle sorte que la région supérieure de la dent de stator (2) soit située dans une position décalée par rapport à la base de stator et que les enroulements de la bobine (3) s'étendant à travers la première région de rainure ainsi que de la bobine s'étendant à travers la deuxième région de rainure se trouvent à chaque fois au niveau d'une région de surface concave des flancs de dent.

5. Stator selon la revendication 4, **caractérisé en ce que** chaque dent de stator (2) est réalisée avec une courbure en S et présente, au niveau de son extrémité extérieure, une tête de dent (4) appliquée en forme de crochet qui recouvre la partie des enroulements d'une bobine (3) s'étendant à travers la deuxième région de rainure.

6. Stator selon l'une quelconque des revendications 1 à 5, **caractérisé en ce que** chaque bobine (3) entoure deux dents de stator (2).

7. Stator selon l'une quelconque des revendications 1 à 6, **caractérisé en ce que** le stator (1) présente vingt-quatre dents de stator (2).

8. Stator selon l'une quelconque des revendications 1 à 7, **caractérisé en ce que** toutes les dents de stator (2) sont réalisées de manière identique.

9. Stator selon l'une quelconque des revendications 1 à 8, **caractérisé en ce que** les dents de stator (2) sont inclinées et/ou courbées de telle sorte que la région de volume (5) à remplir par un enroulement d'une bobine (3) dans la première région de rainure d'une rainure dans la direction radiale se trouve à chaque fois sous la région de volume (6) à remplir par l'enroulement d'une bobine adjacente (3) d'une rainure adjacente.
